# EUROPEAN PATENT APPLICATION

(11) **EP 2 322 357 A1**
(43) Date of publication of application: **18.05.2011**
(21) Application number: 10176100.5
(22) Date of filing: 10.09.2010
(51) Int. Cl.: B60B 5/02, B60B 21/08

(54) **Carbon fibre reinforced plastic bicycle rim with ceramic brake portion**

(71) Applicant: Brainco Composites Inc., Taichung (CN)
(72) Inventor: Tsai, Carlos, TAICHUNG (TW)
(74) Representative: Viering, Hans-Martin

(57) **Abstract**

According to the present invention, a carbon bodied bicycle rim with ceramic brake portion (1) comprises a carbon bodied bicycle rim (10) and a protective film (A) thermal sprayed on the carbon bodied bicycle rim (10). The carbon bodied bicycle rim (10) includes two brake portion (11) respectively formed on two sides thereof. Each brake portion (11) has an outer surface (111). The protective film (A) is thermal sprayed on the outer surface (111) of the brake portion (11), by which the brake portion (11) has a characteristic of wear-resisting and thermal dissipation. The protective film (A) includes an aluminum layer (20) thermal sprayed on the brake portion (11) and a ceramic layer (30) thermal sprayed on the aluminum layer (20).

## Description

### Background of the Invention

### 1. Field of the Invention

The present invention relates generally to a carbon bodied bicycle rim and, more particularly, to a carbon bodied bicycle rim having an aluminum layer sprayed thereon and a ceramic layer sprayed on the aluminum layer for heat insulation effect.

### 2. Description of the Related Art

Bicycle rim is an edge of a wheel onto which a tire is fixed. Most bicycle rims have been made from metal material such like steel or aluminum. The metal material bicycle rims has a stiffness so that the wheel of the bicycle can be provided with durable ability. Even so, the metal material bicycle rims has a disadvantage of heavy weight. Hence, many bicycle rim manufacturers begun to make their rims with other material.

US Patent 6761847 discloses a bicycle wheel rim having an inner peripheral wall, an outer peripheral wall, two lateral walls joining said peripheral walls, and two circumferential wings, for anchoring a tire, is provided. The method providing a rim made of a single part made of structural fiber based material, preferably carbon fiber material. The density of carbon fiber is considerably lower than the density of metal, making it ideal for applications requiring low weight. However, while a user retards the bicycle by operate a brake lever, a brake pad will abut against the bicycle rim to slow down the bicycle. In the meanwhile, a heat will be generated between the bicycle rim and the brake pad. The heat will affect the rigidity of the carbon fiber bicycle rim. Even worse, the heat will cause damage to plastic resin which is used to combine the carbon fiber, and peel off the carbon fiber.

The present invention is, therefore, intended to obviate or at least alleviate the problems encountered in the prior art.

### Summary of the Invention

According to the present invention, the main purpose is to provide a carbon bodied bicycle rim with ceramic brake portion which comprises a carbon bodied bicycle rim and a protective film thermal sprayed on the carbon bodied bicycle rim. The carbon bodied bicycle rim includes two brake portion respectively formed on two sides thereof. Each brake portion has an outer surface. The protective film is thermal sprayed on the outer surface of the brake portion, by which the brake portion has a characteristic of wear-resisting and thermal dissipation. The protective film includes an aluminum layer coated on the brake portion and a ceramic layer coated on the aluminum layer. The aluminum layer has a first side and a second side opposite to the first side. The first side connects onto the outer surface of the brake portion via thermal spraying to provide an excellent bond strength therebetween so that the aluminum layer is firmly coated on the outer surface of the brake portion. The ceramic layer includes a connecting side, wherein the connecting side connects onto the second side of the aluminum layer via thermal spraying to provide an excellent bond strength therebetween so that the ceramic layer is firmly coated on the second side of the aluminum layer.

An advantage of the carbon bodied bicycle rim with ceramic brake portion according to the present invention is that the protective film is thermal sprayed on the outer surface of the brake portion, by which the brake portion has a characteristic of wear-resisting and thermal dissipation.

Another advantage of the carbon bodied bicycle rim with ceramic brake portion according to the present invention is that the protective film and the brake portion have an excellent bond strength therebetween so that the protective film is firmly coated on the brake portion.

Another advantage of the carbon bodied bicycle rim with ceramic brake portion according to the present invention is that the aluminum layer has a characteristic of thermal dissipation so that a heat generated from braking process can be quickly dissipated and prevent the carbon bodied bicycle rim from high temperature damage.

A further advantage of the carbon bodied bicycle rim with ceramic brake portion according to the present invention is that the ceramic layer has a characteristic of high temperature-resistant and wear-resisting so that the ceramic layer can withstand high temperature generated from braking process and be prevented from abrasion.

Other advantages and features of the present invention will become apparent from the following description referring to the drawings.

### Brief Description of the Drawings

Fig. 1 is a perspective view of a carbon bodied bicycle rim according to a first embodiment of the present invention.
Fig. 2 is a cross-section view of the carbon bodied bicycle rim according to the first embodiment of the present invention.
Fig.3 is a flow chart of a method for producing a carbon bodied bicycle rim with a ceramic brake portion, in accordance with the first embodiment.
Fig. 4 is another cross-sectional view taken alone 4-4 in Fig. 1.
Fig. 5 is a partial, enlarged view of Fig. 4.
Fig. 6 is a continued enlarged view of Fig. 5 and shows an aluminum layer is coated on an outer surface of a brake portion.
Fig. 7 is a continued enlarged view of Fig. 6 and shows a ceramic layer is coated on the aluminum layer.
Fig. 8 is a cross-section view of a carbon bodied bicycle rim with ceramic brake portion according to the first embodiment of the present invention.
Fig. 9. illustrates two brake pad abuts the carbon bodied bicycle rim.
Fig.10 is a partial, enlarged view of Fig. 9 and shows a flow pattern of a heat generated from a braking process.
Fig. 11 is a cross-section view of a carbon bodied bicycle rim with ceramic brake portion according to a second embodiment of the present invention.

### Detailed Description of the Preferred Embodiment

The present invention will be described through detailed illustration of two embodiments referring to the drawings.

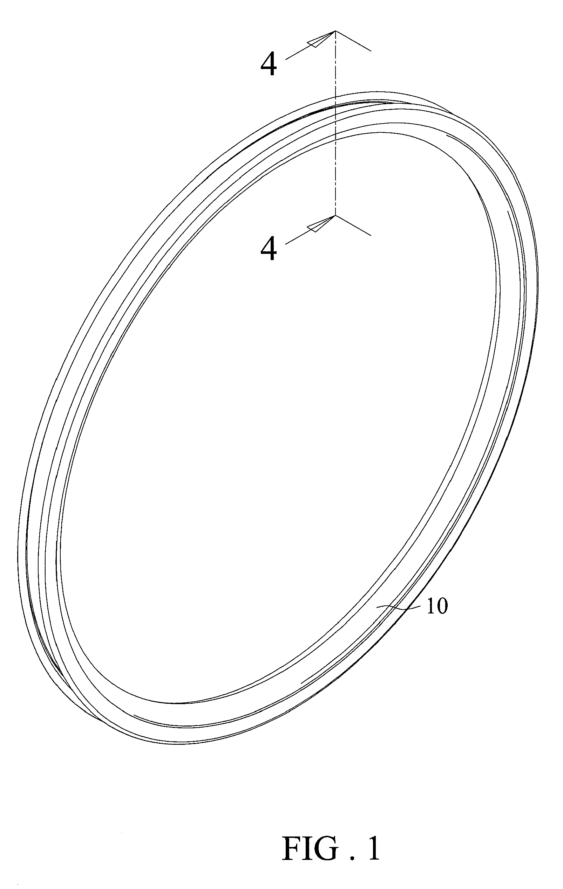

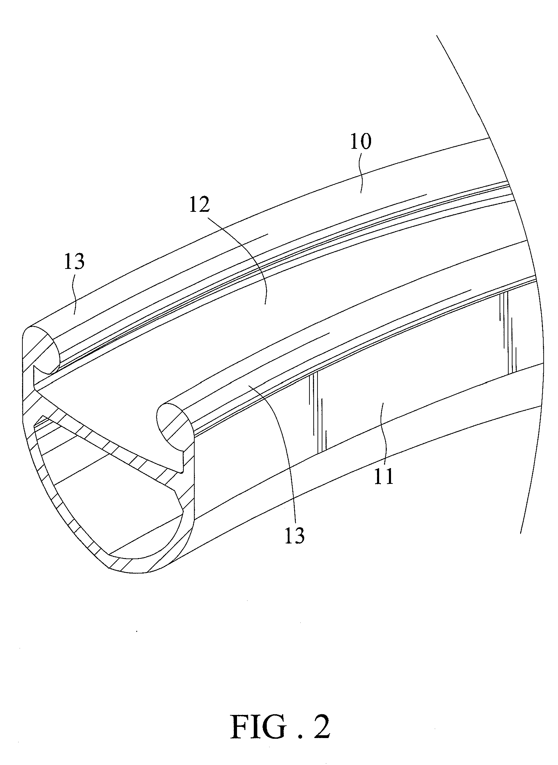

Referring to Fig. 1 and Fig. 2, there is shown a carbon bodied bicycle rim 10 according to a first embodiment of the present invention. The carbon bodied bicycle rim 10, which is clincher type, comprises two brake portions 11 respectively formed on two sides thereof, and a connecting portion 12 extended between the brake portions 11. Each brake portion 11 has an outer surface 111. The carbon bodied bicycle rim 10 further comprises two flanges 13 formed between the brake portions 11 and the connecting portion 12, respectively. The connecting portion 12 and the flanges 13 are adapted for tire installation.

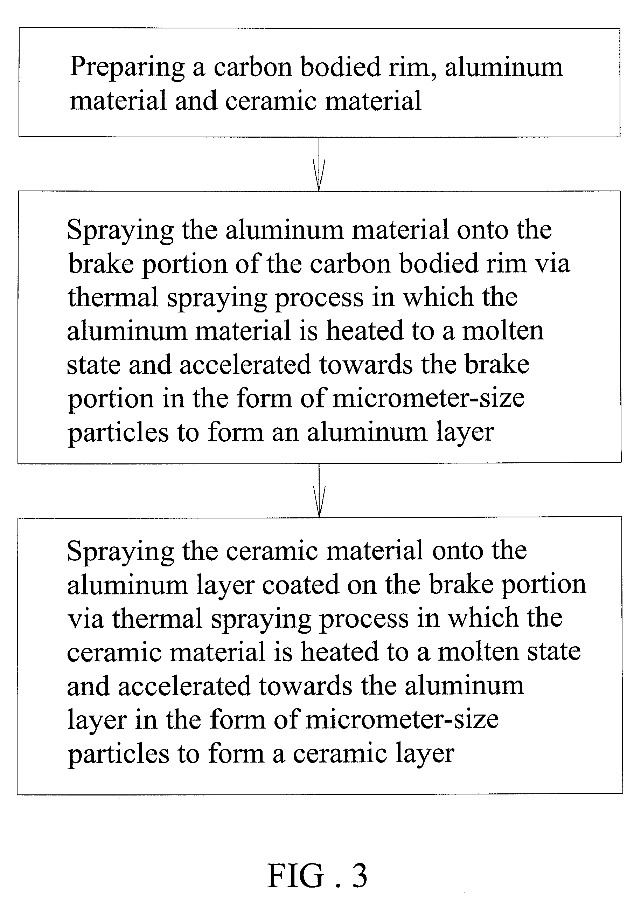

Referring to Fig. 3, a method for producing a carbon bodied bicycle rim with ceramic brake portion includes the steps of: (a) preparing a carbon bodied bicycle rim, aluminum material and ceramic material; (b) spraying the aluminum material onto the brake portion of the carbon bodied bicycle rim via thermal spraying process in which the aluminum material is heated to a molten state and accelerated towards the brake portion in the form of micrometer-size particles to form an aluminum layer; and (c) spraying the ceramic material onto the aluminum layer coated on the brake portion via thermal spraying process in which the ceramic material is heated to a molten state and accelerated towards the aluminum layer in the form of micrometer-size particles to form a ceramic layer.

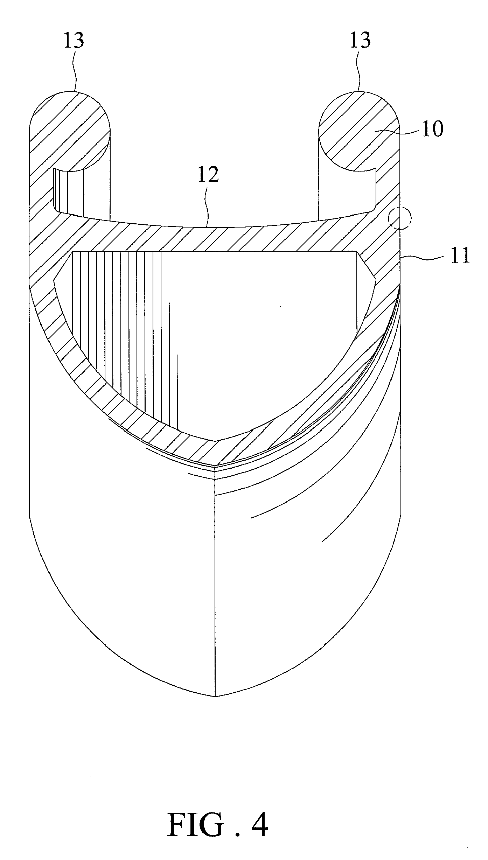

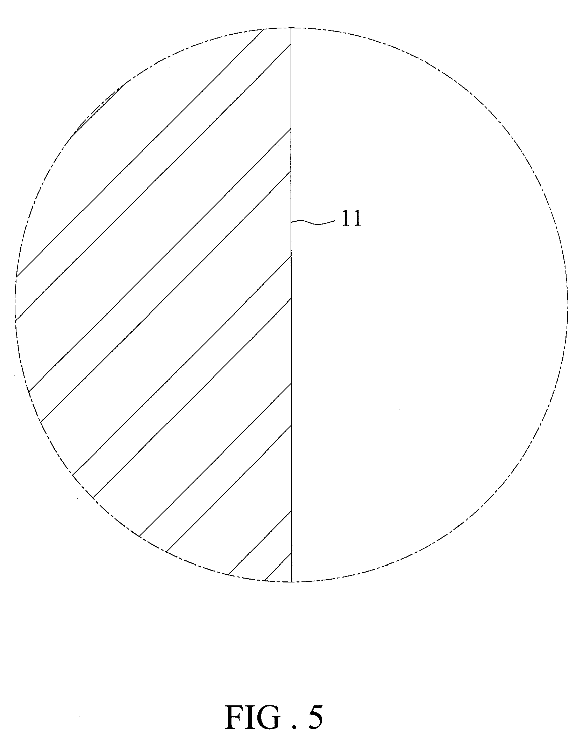

Referring to Fig. 4 and Fig. 5, the aluminum material, which is in powder wire or liquid form, is thermal sprayed onto the outer surface 111 of the brake portion 11 of the carbon bodied bicycle rim 10 for protecting the carbon bodied bicycle rim 10 against heat damage generated from braking process.

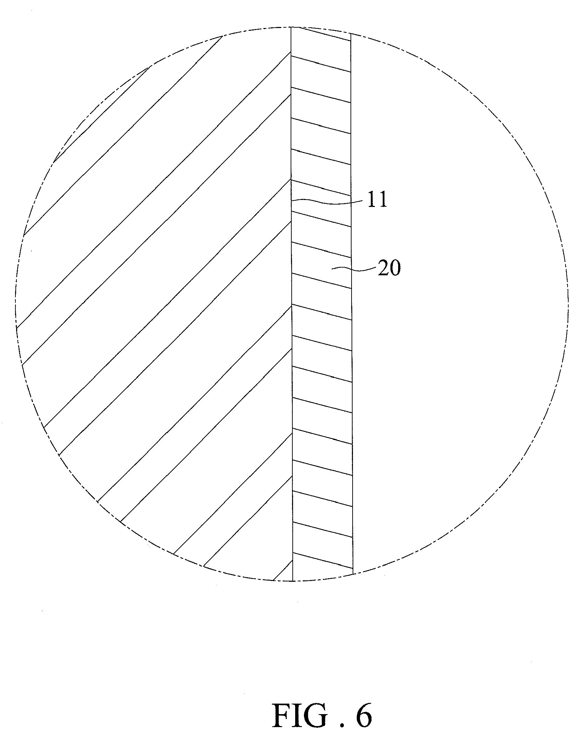

Referring to Fig. 6, the aluminum material, which is heated to the molten state, is thermal sprayed onto the outer surface 111 of the brake portion 11 of the carbon bodied bicycle rim 10 to form an aluminum layer 20. The aluminum material is thermal sprayed with repeatedly interrupted so as to prevent the brake portion 11 of the carbon bodied bicycle rim 10 from being sprayed too much aluminum material at a time, by which the brake portion 11 is prevented from high temperature damage. The aluminum layer 20 includes a first side 21 and a second side 22 opposite to the first side 21. The first side 21 connects onto the outer surface 111 of the brake portion 11 via thermal spraying to provide an excellent bond strength therebetween so that the aluminum layer 20 is firmly coated on the outer surface 111 of the brake portion 11 of the carbon bodied bicycle rim 10. The aluminum layer 20 has a characteristic of thermal dissipation so that a heat generated from braking process can be quickly dissipated and prevent the carbon bodied bicycle rim 10 from high temperature damage.

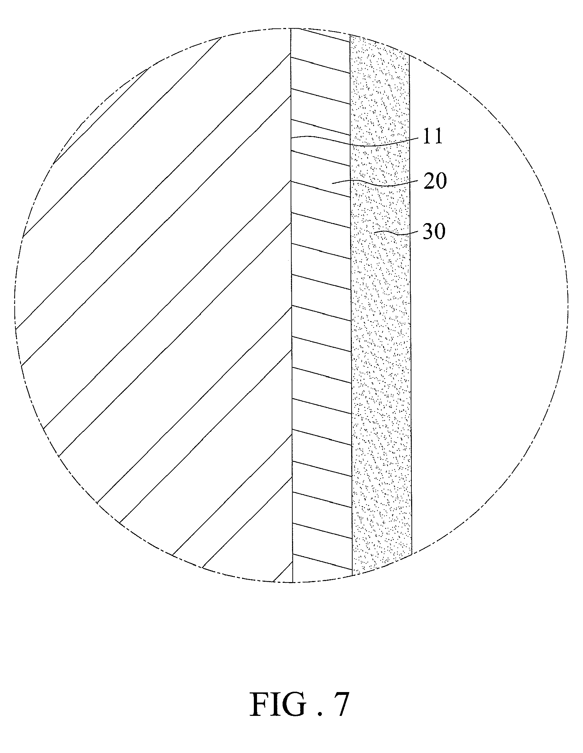

Referring to Fig. 7, the ceramic material is in powder or rod form. The ceramic material, which is heated to the molten state, is thermal sprayed onto the aluminum layer 20 coated on the outer surface 111 of the brake portion 11 of the carbon bodied bicycle rim 10 to form an ceramic layer 30. The ceramic material is thermal sprayed with repeatedly interrupted so as to prevent the brake portion 11 of the carbon bodied bicycle rim 10 from being sprayed too much ceramic material at a time, by which the brake portion 11 is prevented from high temperature damage. The ceramic layer 30 includes a connecting side 31 and a friction side 32. The connecting side 31 connects onto the second side 22 of the aluminum layer 20 via thermal spraying to provide an excellent bond strength therebetween so that the ceramic layer 30 is firmly coated on the second side 22 of the aluminum layer 20. The ceramic layer 30 has a characteristic of high temperature-resistant and wear-resisting so that the ceramic layer 30 can withstand high temperature generated from braking process and be prevented from abrasion. The ceramic layer 30 further has a thermal isolated ability so that the heat generated from braking process will not transmit into the aluminum layer 20 at a time. Hence, the ceramic layer 30 can prevent the carbon bodied bicycle rim 10 from high temperature damage.

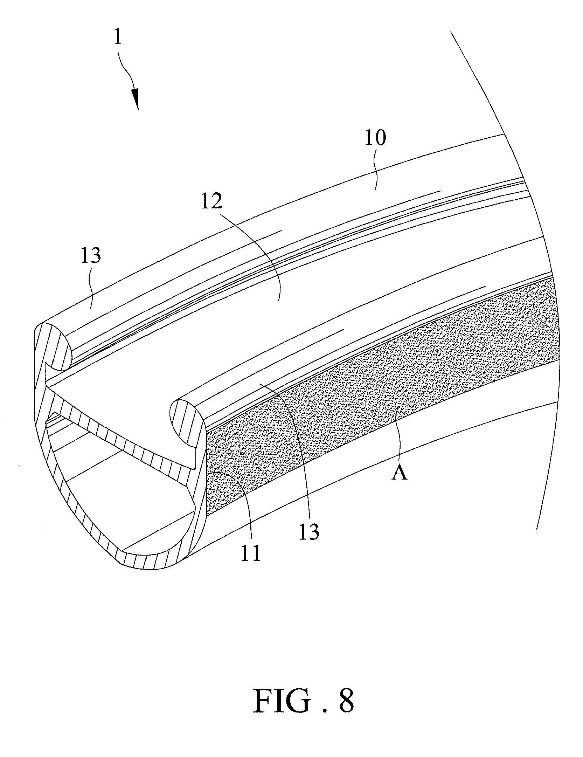

Referring to Fig. 8, a cross section view of a carbon bodied bicycle rim with ceramic brake portion 1 according to the first embodiment is shown. The aluminum layer 20 is thermal sprayed onto the brake portion 11 of the carbon bodied bicycle rim 10. The ceramic layer 30 is thermal sprayed onto the aluminum layer 20. The aluminum layer 20 and ceramic layer 30 are defined as a protective film A, by which the brake portion 11 has a characteristic of wear-resisting and thermal dissipation. The protective film A and the brake portion 11 have an excellent bond strength therebetween so that the protective film A is firmly coated on the brake portion 11.

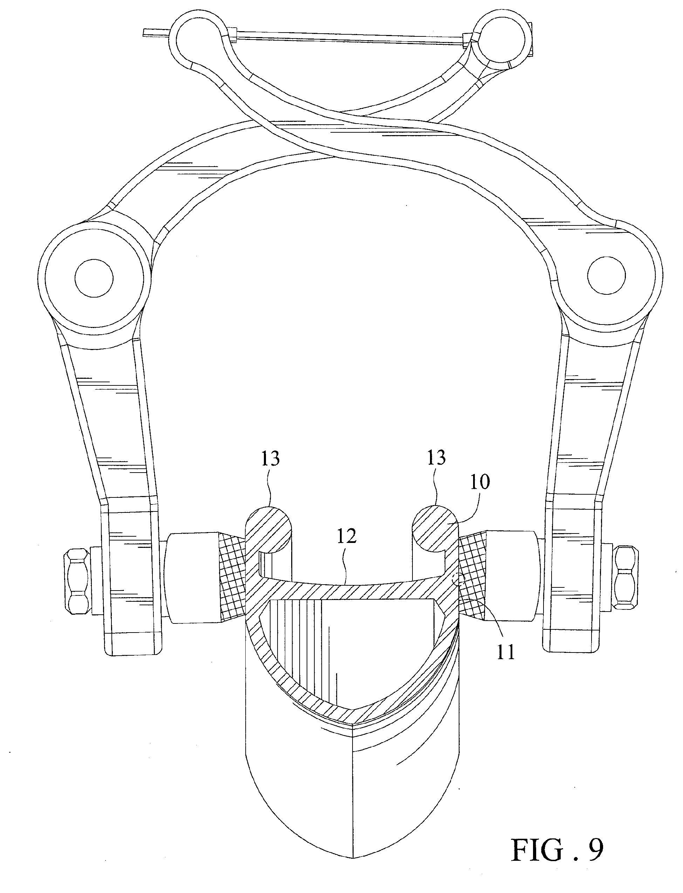

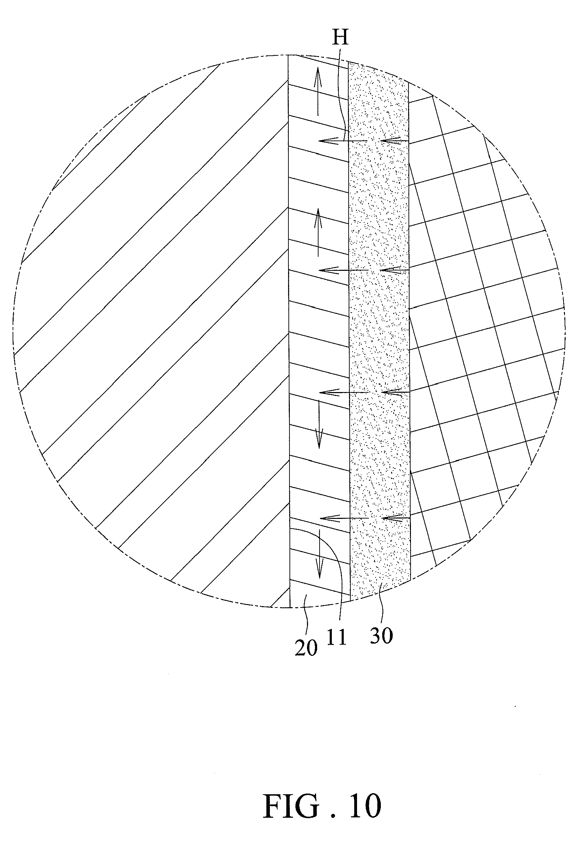

Referring to Fig. 9 and Fig. 10, the friction side 32 of the ceramic layer 30 is adapted to be abutted by a brake pad B. While the brake pad B abutted the friction side 32 of the ceramic layer 30 to slow down a bicycle, a heat H is generated by the friction therebetween. Among which, most of the heat H is prevented from transferring into the aluminum layer 20 due to the thermal isolated ability of the ceramic layer 30. Other heat H, which is pass through the ceramic layer 30, is immediately dissipated by the aluminum layer 20 to protect the carbon bodied bicycle rim 10 against heat damage generated from braking process.

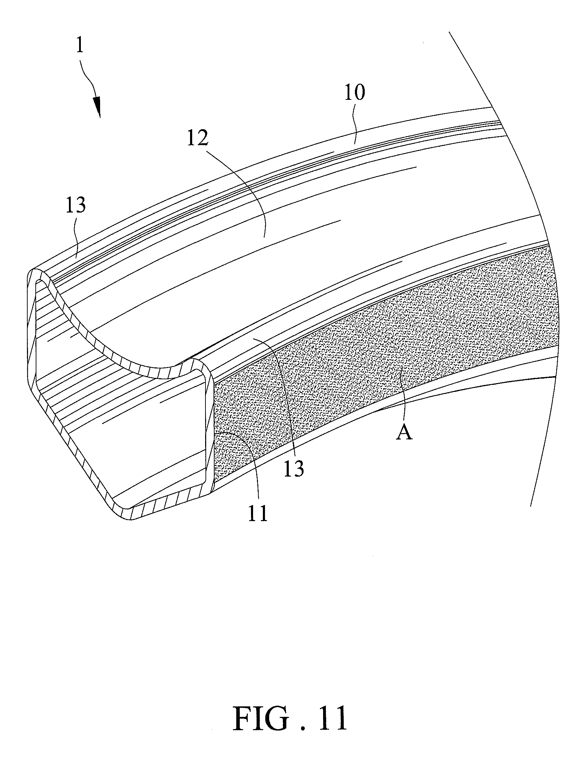

Referring to Fig. 11, there is shown a carbon bodied bicycle rim with ceramic brake portion 1 according to a second embodiment of the present invention. The second embodiment is like the first embodiment except that the carbon bodied bicycle rim 10 is tubular type. The carbon bodied bicycle rim 10 comprises two brake portions 11 respectively formed on two sides thereof, and a connecting portion 12 extended between the brake portions 11. The brake portions 11 are connected to both sides of the connecting portion 12, respectively. The carbon bodied bicycle rim 10 further comprises two flanges 13 formed between the brake portions 11 and the connecting portion 12, respectively. The connecting portion 12 and the flanges 13 are adapted for tire installation. The method for producing a carbon bodied bicycle rim with ceramic brake portion is the same as the first embodiment.

The present invention has been described through the illustration of the embodiments. Those skilled in the art can derive variations from the embodiments without departing from the scope of the present invention. Hence, the embodiments shall not limit the scope of the present invention defined in the claims.

## Claims

1. A carbon bodied bicycle rim with ceramic brake portion (1) comprising:
a carbon bodied bicycle rim (10) including two brake portion (11) respectively formed on two sides thereof, with each brake portion (11) having an outer surface (111); and
a protective film (A) thermal sprayed on the outer surface (111) of the brake portion (11), wherein the protective film (A) includes an aluminum layer (20) coated on the brake portion (11) and a ceramic layer (30) coated on the aluminum layer (20), wherein the aluminum layer (20) has a first side (21) and a second side (22) opposite to the first side (21), wherein the first side (21) connects onto the outer surface (111) of the brake portion (11) via thermal spraying to provide an excellent bond strength therebetween so that the aluminum layer (20) is firmly coated on the outer surface (111) of the brake portion (11), wherein the ceramic layer (30) includes a connecting side (31), wherein the connecting side (31) connects onto the second side (22) of the aluminum layer (20) via thermal spraying to provide an excellent bond strength therebetween so that the ceramic layer (30) is firmly coated on the second side (22) of the aluminum layer (20).

2. The carbon bodied bicycle rim with ceramic brake portion (1) as claimed in claim 1, wherein the aluminum layer (20) is formed by thermal spraying an aluminum material onto the brake portion (11).

3. The carbon bodied bicycle rim with ceramic brake portion (1) as claimed in claim 2, wherein the ceramic layer (30) is formed by thermal spraying a ceramic material onto the brake portion (11).

4. The carbon bodied bicycle rim with ceramic brake portion (1) as claimed in claim 1, wherein the carbon bodied bicycle rim (10) further includes a connecting portion (12) extended between the brake portions (11), wherein the connecting portion (12) is adapted for tire installation.

5. The carbon bodied bicycle rim with ceramic brake portion (1) as claimed in claim 4 further comprising two flanges (13) formed between the brake portions (11) and the connecting portion (12), respectively, wherein the flanges (13) are adapted for tire installation.

6. The carbon bodied bicycle rim with ceramic brake portion (1) as claimed in claim 1, wherein the carbon bodied bicycle rim (10) is clincher type.

7. The carbon bodied bicycle rim with ceramic brake portion (1) as claimed in claim 1, wherein the carbon bodied bicycle rim (10) is tubular type.

8. A method for producing a carbon bodied bicycle rim with ceramic brake portion includes the steps of:
(a) preparing a carbon bodied bicycle rim, aluminum material and ceramic material;
(b) spraying the aluminum material onto the brake portion of the carbon bodied bicycle rim via thermal spraying process in which the aluminum material is heated to a molten state and accelerated towards the carbon bodied bicycle rim in the form of micrometer-size particles to form an aluminum layer; and
(c) spraying the ceramic material onto the aluminum layer coated on the brake portion via thermal spraying process in which the ceramic material is heated to a molten state and accelerated towards the aluminum layer in the form of micrometer-size particles to form a ceramic layer.

9. The method for producing a carbon bodied bicycle rim with ceramic brake portion as claimed in claim 8, wherein the aluminum material is thermal sprayed onto the brake portion of the carbon bodied bicycle rim to form the aluminum layer, wherein the ceramic material is thermal sprayed onto the aluminum layer to form the ceramic layer.

10. The method for producing a carbon bodied bicycle rim with ceramic brake portion as claimed in claim 8, wherein the aluminum material is thermal sprayed with repeatedly interrupted onto the carbon bodied bicycle rim, wherein the ceramic material is thermal sprayed with repeatedly interrupted onto the aluminum layer.
